# DEMANDE DE BREVET EUROPEEN

(11) **EP 1 035 492 A1**
(43) Date de publication de la demande: **13.09.2000**
(21) Numéro de dépôt: 00410025.1
(22) Date de dépôt: 10.03.2000
(51) Int. Cl.: G06K 7/08

(54) **Lecteur de carte sans contact résistant au vandalisme**

(30) Priorité: 12.03.1999 FR 9903259
(71) Demandeur: Ascom Monétel SA, 07500 Guilherand-Granges (FR)
(72) Inventeur: Roux, Pascal, 26120 Chabeuil (FR)
(74) Mandataire: de Beaumont, Michel

(57) **Abrégé**

L'invention concerne un lecteur magnétique (20) d'élément portable sans contact, disposé dans un boîtier métallique (3), la face avant (22) du boîtier comprenant une fente (23) constituant l'entrée d'une niche (24) dans laquelle peut être insérée au moins la partie dudit élément susceptible de coopérer avec le lecteur, les parois de ladite niche étant métalliques à l'exception d'au moins une fenêtre (26) permettant d'assurer un couplage magnétique entre le lecteur et ledit élément.

## Description

La présente invention concerne les lecteurs d'éléments portables sans contact tels que des lecteurs de carte sans contact. L'invention vise de tels lecteurs susceptibles de résister à des actions de vandalisme, utilisables par exemple pour commander des serrures d'immeuble.

Un lecteur de carte sans contact produit un champ magnétique au moyen d'une antenne, et il détecte le passage dans ce champ magnétique d'une boucle portée par un élément portable. Dans la suite de la présente description on se référera uniquement par souci de simplicité et de brièveté au cas où l'élément portable est une carte, mais il pourra s'agir de tout autre élément contenant un enroulement magnétique susceptible d'affecter le champ émis par le lecteur : un porte-clefs, une clef, une montre ...

Un lecteur de carte sans contact peut être prévu pour ne lire que certaines cartes munies d'une puce programmée selon un code particulier, et déclencher alors l'ouverture d'une porte. Les méthodes de cryptage et de codage actuelles permettent de faire évoluer, par exemple au jour le jour, le code particulier qui doit être fourni à la puce d'une carte sans contact pour que cette dernière soit reconnue par le lecteur, et ouvre la porte.

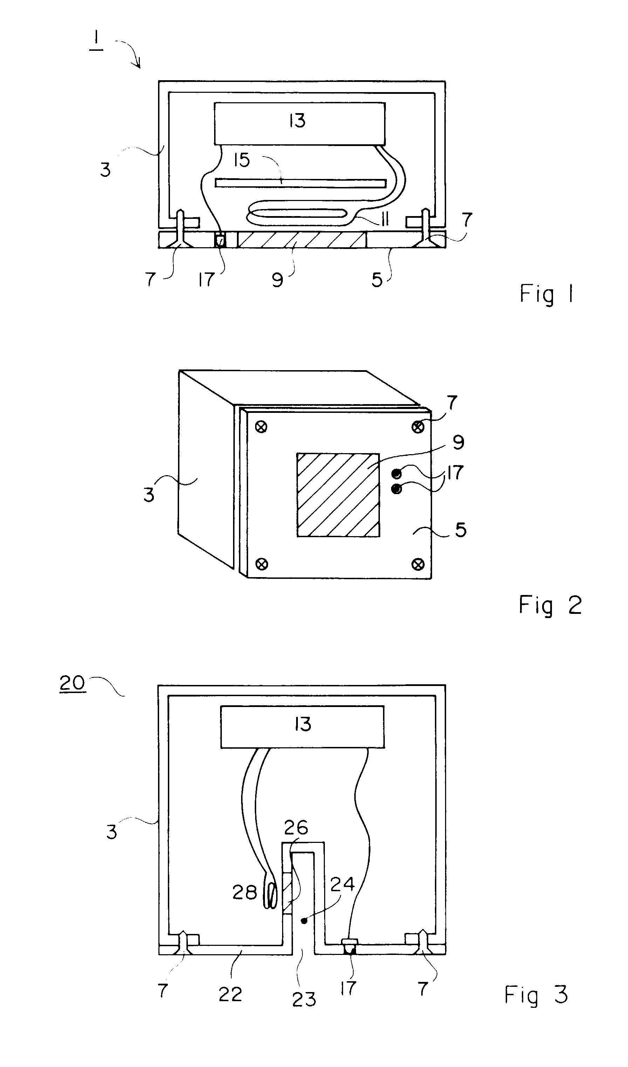

La figure 1 représente schématiquement une vue de dessus en coupe d'un lecteur de carte sans contact 1 comprenant un boîtier 3 fermé par une plaque avant 5 au moyen de vis inviolables 7. La plaque avant 5 doit être en un matériau résistant à d'éventuelles actions de vandalisme, ce qui conduit à choisir un métal, par exemple de l'acier, d'épaisseur suffisante. Ce matériau constituant un écran magnétique, il est prévu une fenêtre 9, par exemple en polycarbonate, permettant d'assurer le passage d'un champ magnétique produit par une antenne 11 reliée à un émetteur-récepteur 13. Optionnellement, une protection ferromagnétique 15 isole l'émetteur-récepteur 13 du champ produit par l'antenne 11. Un ou plusieurs voyants lumineux 17 reliés à l'émetteur-récepteur 13 sont placés dans une ouverture de la face avant de manière à être visibles par l'utilisateur du lecteur. Les voyants lumineux 17, susceptibles d'être éteints, allumés ou clignotants, permettent de fournir à l'usager des messages simples tels que "Carte acceptée" ou "Carte refusée".

Un inconvénient majeur d'un tel lecteur est que sa face avant présente une grande fenêtre de polycarbonate, particulièrement accessible et sensible à certains actes de vandalisme, comme ceux perpétrés à l'aide d'une perceuse électrique portable.

Un autre inconvénient de ce lecteur est que la taille de sa face avant est bien plus importante que celle d'une serrure qu'il peut être appelé à remplacer, ce qui peut rendre son installation délicate.

Un objet de la présente invention est de prévoir un lecteur de carte sans contact qui soit particulièrement résistant aux actes de vandalisme.

Un autre objet de la présente invention est de prévoir un tel lecteur dont la face avant puisse être de taille réduite.

Pour atteindre ces objets, ainsi que d'autres, la présente invention prévoit un lecteur magnétique d'élément portable sans contact, disposé dans un boîtier métallique, la face avant du boîtier comprenant une fente constituant l'entrée d'une niche dans laquelle peut être insérée au moins la partie dudit élément susceptible de coopérer avec le lecteur, les parois de ladite niche étant métalliques à l'exception d'au moins une fenêtre permettant d'assurer un couplage magnétique entre le lecteur et ledit élément.

Selon un mode de réalisation de la présente invention, la niche est délimitée par deux parois principales sensiblement planes s'étendant à partir des deux bords allongés de ladite fente et une première de ces parois comprend une première fenêtre.

Selon un mode de réalisation de la présente invention, la paroi opposée à ladite première paroi comporte une deuxième fenêtre opposée à la première et le lecteur comporte un circuit magnétique dont l'entrefer est délimité par les faces desdites fenêtres opposées à leurs faces en regard.

Selon un mode de réalisation de la présente invention, deux branches en matériau ferromagnétique prolongent le circuit magnétique et débouchent dans des ouvertures pratiquées dans la face avant du boîtier.

Selon un mode de réalisation de la présente invention, un trou est pratiqué dans une des parois de la niche pour permettre à un voyant lumineux d'éclairer la niche.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, est une vue de dessus en coupe d'un lecteur de carte sans contact classique ;
la figure 2, précédemment décrite, est une vue en perspective cavalière du lecteur de la figure 1 ;
la figure 3 est une vue de dessus en coupe d'un mode de réalisation d'un lecteur selon la présente invention ;
la figure 4 est une vue en perspective cavalière du lecteur de la figure 3 ;
la figure 5 est une vue de côté en coupe de la face avant du lecteur de la figure 3 ;
la figure 6 est une vue de dessus partielle en coupe d'un autre mode de réalisation d'un lecteur selon la présente invention ;
la figure 7 est une vue de dessus partielle en coupe d'un autre mode de réalisation d'un lecteur selon la présente invention ; et
la figure 8 est une vue de dessus partielle en coupe d'un autre mode de réalisation d'un lecteur selon la présente invention.

De mêmes références représentent de mêmes éléments dans les figures décrites précédemment comme dans les figures qui suivent.

La figure 3 représente une vue de dessus en coupe d'un mode de réalisation d'un lecteur de carte sans contact 20 selon la présente invention. La face avant 22 du boîtier 3 comprend une fente 23 constituant l'entrée d'une niche 24 aux parois métalliques. La hauteur, la largeur et la profondeur de la niche 24 sont telles qu'on peut introduire sans frottement la partie détectable d'une carte sans contact dans la niche. Cette partie détectable est généralement une antenne formée dans l'épaisseur de la carte par une boucle métallique.

La niche 24 est délimitée par deux parois principales sensiblement planes s'étendant vers l'intérieur du boîtier à partir des deux bords allongés de la fente 23. Une des parois principales de la niche 24 comprend une fenêtre 26 en un matériau diélectrique, par exemple en polycarbonate.

Une antenne 28 reliée à l'émetteur-récepteur 13 est située contre la face interne de la fenêtre 26. La dimension de l'antenne 28 est essentiellement fixée par la distance de détection. La fenêtre 26 doit être suffisamment grande par rapport à l'antenne pour que les lignes de champ sortantes et entrantes du champ magnétique produit par l'antenne 28 traversent la fenêtre 26. Si la fenêtre 26 est trop étroite, les lignes de champ sortantes produites par l'antenne 28 traversent la fenêtre 26, mais elles se perdent dans les parois métalliques de la niche 24, et aucune détection n'est plus possible.

A titre d'exemple, la fenêtre 26 doit avoir un diamètre d'environ 3 à 5 cm, l'antenne doit avoir un diamètre d'environ 3 à 5 cm, pour une distance antenne carte de 1 à 2 cm.

La fenêtre 26 est placée vers le centre de la paroi principale, de manière que le champ magnétique fourni par l'antenne 28 à travers la fenêtre 26 coopère avec la partie détectable d'une carte sans contact introduite dans la niche 24, tout en rendant la fenêtre 26 peu accessible à d'éventuels vandales.

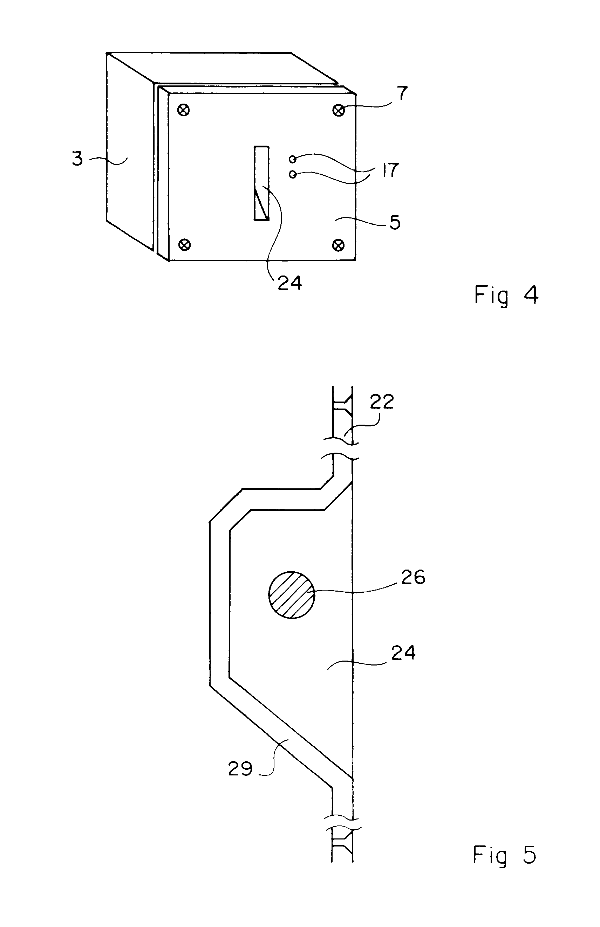

La figure 4 représente une vue en perspective cavalière du lecteur de la figure 3. La largeur minimale de la face avant n'est plus limitée que par la largeur de la niche 24, qui est de l'ordre du centimètre. De plus, le système émetteur récepteur 13 et la boucle d'antenne émettrice pourront être nettement plus petits que dans l'art antérieur puisque la carte est positionnée par la fente à une distance réduite de l'antenne, qui peut ainsi être de portée réduite. Pour cette raison également, la puissance fournie à l'antenne peut être réduite, ce qui confère une plus grande autonomie au lecteur alimenté sur une batterie de secours en cas de panne du secteur.

La figure 5 représente une vue de côté en coupe de la face avant 22 du lecteur de la figure 3. Les parois haute et basse de la niche comprennent des plans inclinés ou sont inclinées de manière à évaser le profil de la niche pour faciliter l'insertion et le retrait d'une carte sans contact. Pour les raisons vues précédemment, la fenêtre 26 est positionnée vers le milieu de l'une des parois principales. D'autre part, la forme et la largeur de la niche 24 sont destinées à éviter que des objets s'y accumulent et à faciliter son nettoyage. En particulier, la paroi inférieure de la niche est de préférence fortement inclinée vers le bas.

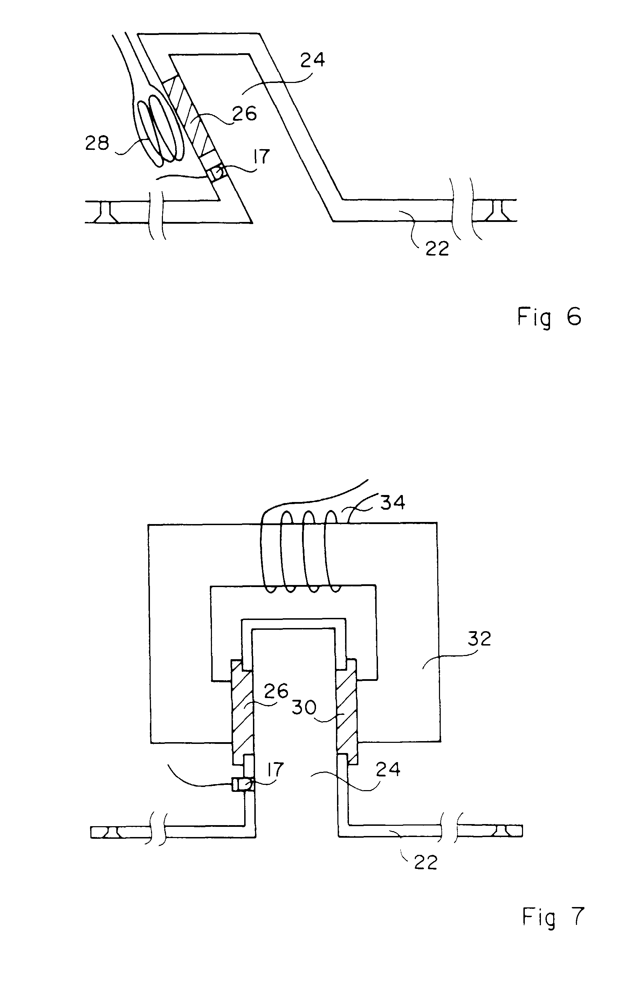

La figure 6 représente un autre mode de réalisation de la présente invention. Dans ce mode de réalisation, le plan des parois principales de la niche 24 est incliné par rapport à la perpendiculaire à la plaque avant 22, de manière que la paroi principale qui comprend la fenêtre 26 fasse un angle aigu avec la face avant 22. Cette configuration rend la fenêtre 26 plus difficile encore à atteindre pour un vandale. On pourra en outre, prévoir que la fenêtre 26 soit en retrait par rapport au plan, côté niche, de la plaque métallique sur laquelle elle est fixée.

Selon une variante, également illustrée en figure 6, le ou les voyants lumineux 17 précédemment décrits sont placés dans une ouverture pratiquée dans la paroi qui comprend la fenêtre 26. Le voyant 17 ne sera alors visible que par réflexion sur la paroi principale située en regard, mais il sera moins accessible et moins sujet à un acte de vandalisme.

La figure 7 représente une vue de dessus en coupe d'un autre mode de réalisation de la présente invention. La niche 24 comprend une deuxième fenêtre 30 semblable à la fenêtre 26, pratiquée en regard de celle-ci. Un circuit magnétique 32 relie les faces internes des fenêtres 26 et 30 à l'intérieur du boîtier 3. La section du circuit magnétique 32 au niveau des fenêtres 26 et 30 est inférieure à la surface de ces dernières pour limiter les pertes magnétiques dans les parois de la niche 24. Un bobinage 34 autour du circuit 32 est relié à l'émetteur-récepteur 13. Un voyant lumineux 17 est situé dans une ouverture d'une paroi principale de la niche 24.

La niche 24 étant étroite, on obtient un bon couplage magnétique dans l'entrefer entre les deux extrémités du circuit 32, ce qui permet de produire le champ magnétique de détection avec une puissance réduite par rapport aux modes de réalisation précédents. De plus, les lignes de champ produites par le bobinage 34 dans l'entrefer traversent directement la niche 24 entre les fenêtres 26 et 30 et ces dernières peuvent avoir un diamètre réduit par rapport à la fenêtre 26 des modes de réalisation précédents. A titre d'exemple, les fenêtres 26 et 30 peuvent avoir un diamètre d'environ 1 cm.

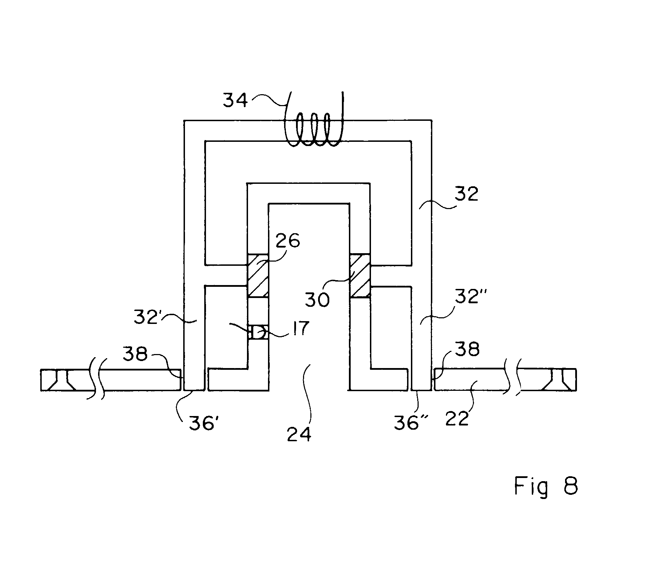

La figure 8 représente en vue de dessus en coupe une variante du mode de réalisation de la figure 7. Le circuit magnétique de la figure 8 comprend des branches supplémentaires 32' et 32" qui s'étendent jusqu'à des ouvertures 36' et 36" prévues dans la plaque avant 22 du boîtier, et en sont séparées par des joints diélectriques 38. Selon une variante, non représentée, les branches 32' et 32" pourraient venir buter contre des fenêtres aménagées dans la plaque avant 22.

Les champs magnétiques produits par la bobine 34 circulent dans les circuits magnétiques 32' et 32", et se referment, d'une part, dans l'entrefer délimité par les fenêtres 26 et 30, d'autre part, dans l'entrefer s'étendant entre les extrémités des branches 32' et 32". Les lignes de champ passant entre les ouvertures 36' et 36" permettent de lire une carte sans contact placée contre la face avant 22 ou approchée de cette dernière.

La variante de réalisation de la figure 8 est tout particulièrement utile si on veut lire, d'une part des cartes, d'autre part des éléments portables sans contact ayant des formes non adaptées à entrer dans une niche, par exemple, une montre munie d'une boucle susceptible d'interagir avec un lecteur magnétique.

Bien entendu, la présente invention est susceptible de diverses variantes et modifications qui apparaîtront à l'homme du métier.

A titre d'exemple, la face avant du lecteur pourra comporter deux niches séparées, l'une prévue pour recevoir des cartes sans contact, l'autre, plus petite, ne comprenant que des voyants lumineux 17 disposés par exemple comme en figure 6.

La niche 24 pourra être fabriquée indépendamment de la plaque avant 22 et être fixée à cette plaque par soudage ou par tout autre moyen d'assemblage approprié. Elle peut également être démontable depuis l'intérieur du boîtier, afin de faciliter un éventuel entretien.

## Revendications

1. Lecteur magnétique (20) disposé dans un boîtier métallique (3) et propre à détecter une boucle conductrice faisant partie d'un élément portable sans contact, caractérisé en ce que la face avant (22) du boîtier comprend une fente (23) constituant l'entrée d'une niche (24) dans laquelle peut être insérée sans frottement au moins la partie dudit élément susceptible de coopérer avec le lecteur, et en ce que les parois de ladite niche sont métalliques à l'exception d'au moins une fenêtre en matériau diélectrique (26) permettant d'assurer un couplage magnétique entre le lecteur et ledit élément.

2. Lecteur selon la revendication 1, caractérisé en ce que la niche est délimitée par deux parois principales sensiblement planes s'étendant à partir des deux bords allongés de ladite fente et en ce qu'une première de ces parois comprend une première fenêtre (26).

3. Lecteur selon la revendication 2, caractérisé en ce que la paroi opposée à ladite première paroi comporte une deuxième fenêtre (30) opposée à la première et en ce que le lecteur comporte un circuit magnétique (32) dont l'entrefer est délimité par les faces desdites fenêtres (26, 30) opposées à leurs faces en regard.

4. Lecteur selon la revendication 3, caractérisé en ce que deux branches en matériau ferromagnétique (32', 32") prolongent le circuit magnétique et débouchent dans des ouvertures (36', 36") pratiquées dans la face avant (22) du boîtier.

5. Lecteur selon l'une quelconque des revendications 1 à 4, caractérisé en ce qu'un trou est pratiqué dans une des parois de la niche pour permettre à un voyant lumineux (17) d'éclairer la niche.
